# EUROPÄISCHE PATENTSCHRIFT

(11) **EP 1 204 459 B1**
(45) Veröffentlichungstag und Bekanntmachung des Hinweises auf die Patenterteilung: **22.10.2003**
(21) Anmeldenummer: 00954623.5
(22) Anmeldetag: 11.08.2000
(51) Int. Cl.: B01D 53/94, F01N 3/20, F01N 3/28

(54) **VORRICHTUNG ZUR VERRINGERUNG DES STICKOXIDANTEILS IN EINEM ABGAS EINER VERBRENNUNGSKRAFTMASCHINE**
DEVICE FOR REDUCING THE NITROGEN CONTENT OF THE WASTE GASES OF AN INTERNAL COMBUSTION ENGINE
DISPOSITIF PERMETTANT DE REDUIRE LA TENEUR EN AZOTE DANS UN GAZ D'ECHAPPEMENT ISSU D'UN MOTEUR A COMBUSTION INTERNE

(30) Priorität: 17.08.1999 DE 19938854
(43) Veröffentlichungstag der Anmeldung: 15.05.2002
(73) Patentinhaber: Emitec Gesellschaft für Emissionstechnologie mbH, 53797 Lohmar (DE)
(72) Erfinder: HODGSON, Jan, 53819 Neunkirchen-Seelscheid (DE)
(74) Vertreter: Kahlhöfer, Hermann, Dipl.-Phys.
(86) Internationale Anmeldenummer: EP0007832
(87) Internationale Veröffentlichungsnummer: WO01012301

(56) Entgegenhaltungen:
- EP-A- 0 555 746
- EP-A- 0 918 146
- US-A- 5 506 028

## Beschreibung

Der Gegenstand der vorliegenden Erfindung betrifft eine Vorrichtung zur katalytischen Reduktion von Stickoxid (NO_{X}) in kaltenden Abgasen einer Verbrennungskraftmaschine.

Bei der Verbrennung von Kohlenwasserstoffen in einer Verbrennungskraftmaschine, bei der es sich beispielsweise um einen Diesel- oder Ottomotor handeln kann, entstehen neben den Hauptverbrennungsprodukten Kohlendioxid und Wasserdampf auch Nebenprodukte, die teilweise unerwünscht sind. Hierbei kann es sich um Stickoxide handeln. Der Anteil der Stickoxide ist neben der Prozeßführung der Verbrennung auch von dem Luft-/Kraftstoffverhältnis abhängig. Bei Luftunterschuß enthält das Abgas relativ viel Kohlendioxid und Kohlenwasserstoffe, während bei Luftüberschuß das Kohlendioxid und die Kohlenwasserstoffe fast vollständig oxidiert werden. Der Gehalt an Stickoxiden in einem Abgas durchläuft ein Maximum im Bereich leicht magerer Gemischzusammensetzung. In diesem Bereich liegt aber auch für Verbrennungsmotoren, insbesondere für Ottomotoren, ein Optimum des spezifischen Verbrauches. Werden also insbesondere Ottomotoren auf optimal niedrigen Verbrauch eingestellt, können auch hohe NO_{X}-Konzentrationen im Abgas vorhanden sein.

Zur Verringerung des NO_{X}-Gehaltes in einem Abgas einer Verbrennungskraftmaschine ist beispielsweise durch die EP 0 487 886 A1 bekannt, daß die selektive katalytische NO_{X}-Reduktion in sauerstoffhaltigen Abgasen unter Anwendung von Harnstoff und einem Reduktionskatalysator möglich ist. Der Harnstoff wird vor Kontakt mit dem Reduktionskatalysator, bei dem es sich um einen katalytischen Konverter handelt, quantitativ zu Ammoniak und Kohlendioxid hydrolysiert. Die Verwendung von Harnstoff hat den Vorteil, daß die Mitführung von Ammoniak bei Kraftfahrzeugen und die Bereitstellung von Ammoniak, die entsprechende Sicherheitsvorkehrungen erfordern, vermieden werden.

Problematisch bei der Verwendung von Harnstoff als Reduktionsmittel ist, daß bei einer unmittelbaren Einspritzung von Harnstoff vor dem katalytischen Konverter unerwünschte Reaktionsprodukte entstehen können. Hierbei können bei der Harnstoff-Thermolyse Feststoffe entstehen.

Zur Vermeidung dieses Problems schlägt die DE 42 03 807 A1 eine Vorrichtung zur katalytischen Reduktion von Stickoxiden enthaltenden Abgasen einer Verbrennungskraftmaschine vor. Die Vorrichtung weist einen katalytischen Konverter sowie eine Zuführeinrichtung, die den flüssigen Harnstoff fein auf einen vor dem katalytischen Konverter angeordneten Verdampfer fein sprüht.

Der Verdampfer ist in Form eines Strömungsmischers ausgebildet, wodurch der Wirkungsgrad der Harnstoff-Zersetzung erhöht werden soll. Der als Strömungsmischer ausgebildete Verdampfer, welcher nachfolgend "Mischer" bezeichnet wird, soll nach der DE 42 03 807 A1 vorzugsweise so ausgebildet sein, daß innerhalb des Mischers Verwirbelungen und radiale und/oder tangentiale Strömungskomponenten hervorgerufen werden, so daß die Wärmeübertragung auf die Harnstofflösung möglichst rasch und vollkommen vollzogen wird. Ferner soll eine möglichst gleichmäßige Verteilung der Harnstofflösung sowie der daraus entstehenden Gase über den gesamten Querschnitt des Verdampfers und eines hinter dem Verdampfer angeordneten Hydrolysekatalysators bewirkt werden.

Das den Hydrolysekatalysator verlassende Fluid enthaltende Abgas der Verbrennungskraftmaschine sowie Ammoniak und Kohlendioxid wird einem katalytischen Konverter zugeführt, in dem unter anderem die Stickoxidreduktion stattfindet.

Hiervon ausgehend liegt der vorliegenden Erfindung die Zielsetzung zugrunde, die Effizienz einer Vorrichtung zu katalytischen Reduktion von Stickoxiden enthaltenden Abgasen einer Verbrennungskraftmaschine noch weiter zu steigern.

Diese Zielsetzung wird durch die erfindungsgemäße Vorrichtung zur katalytischen Redukion von NO_{X} enthaltenden Abgasen einer Verbrennungskraftmaschine mit den Merkmalen des Anspruchs 1 erreicht. Vorteilhafte Weiterbildungen und Ausgestaltungen der Vorrichtung sind Gegenstand der abhängigen Ansprüche.

Die erfindungsgemäße Vorrichtung zur katalytischen Reduktion von NO_{X} enthaltenden Abgasen einer Verbrennungskraftmaschine weist eine Abgasleitung auf, die mit ihrem einen Ende mit wenigstens einem Abgasauslaß einer Verbrennungskraftmaschine verbindbar ist. Es ist eine Zufuhreinrichtung vorgesehen, durch die ein Reduktionsmittel, insbesondere Harnstoff, in die Abgasleitung einleitbar ist. Desweiteren weist die Vorrichtung wenigstens einen Mischer auf, der in Strömungsrichtung des Abgases betrachtet stromabwärts der Zuführung des Reduktionsmittels in der Abgasleitung angeordnet ist, wobei dieser eine Vielzahl vom Fluid durchströmbare Kanäle aufweist. Dem wenigstens einem Mischer ist wenigstens ein katalytischer Konverter nachgeordnet. Die erfindungsgemäße Vorrichtung zeichnet sich dadurch aus, daß zwischen dem Mischer und dem Konverter wenigstens ein Diffusor vorgesehen ist, der eine Vielzahl vom Abgas durchströmbare Kanäle hat, welche einen in Strömungsrichtung zunehmenden Querschnitt aufweisen.

Durch diese erfindungsgemäße Ausgestaltung der Vorrichtung wird erreicht, daß das den wenigstens einen Mischer verlassende Fluid, welches das Abgas der Verbrennungskraftmaschine sowie die Zersetzungsprodukte des Reduktionsmittels, insbesondere Ammoniak und Kohlendioxid enthält, gleichmäßig in den katalytischen Konverter überführt wird. Hierdurch wird erreicht, daß der katalytische Konverter relativ gleichmäßig über seinem gesamten Querschnitt angeströmt wird, so daß es zu einer gleichmäßigen Ausnutzung des katalytischen Konverters kommt.

Durch den Diffusor, der eine Vielzahl vom Abgas durchströmbare Kanäle hat, welche einen in Strömungsrichtung zunehmenden Querschnitt aufweisen, kann das Fluid sehr gleichmäßig auf die gesamte Eintrittsseite des katalytischen Konverters verteilt werden. Die Druckverluste des Diffusors sind dabei relativ gering.

Gemäß einer vorteilhaften Ausgestaltung wird vorgeschlagen, daß der freie Strömungsquerschnitt am Eintritt des Diffusors wenigstens dem freien Strömungsquerschnitt am Austritt des Mischers entspricht. Hierdurch wird erreicht, daß die Druckverluste im Übergangsbereich zwischen dem Mischer und dem Diffusor relativ gering sind.

Nach einer noch weiteren vorteilhaften Ausgestaltung der Erfindung wird vorgeschlagen, daß der Diffusor am Eintritt eine Zelldichte aufweist, die einer Zelldichte des Mischers entspricht. Hierdurch werden weitere Druckverluste vermieden.

Gemäß einer noch weiteren vorteilhaften Ausgestaltung der Vorrichtung wird vorgeschlagen, daß die Querschnittsform der einzelnen Kanäle am Eintritt des Diffusors im wesentlichen der Querschnittsform der einzelnen Kanäle des Mischers am Austritt entsprechen. Vorzugsweise fluchtet wenigstens ein Teil der einzelnen Kanäle des Diffusors am Eintritt mit einem Teil der einzelnen Kanäle des Mischers am Austritt. Durch diese Anordnung und Ausgestaltung des Mischers und des Diffusors wird erreicht, daß der Kanal des Mischers quasi in den Kanal des Diffusors übergeht. Hierdurch werden Druckverluste im Übergangsbereich zwischen Diffusor und Mischer noch weiter reduziert.

Zu einer noch weiteren Verbesserung der Vermischung des Harnstoffes mit dem Abgas wird vorgeschlagen, daß die Kanäle des Diffusors versetzt zu den Kanälen des Mischers am Austritt sind. Hierdurch wird eine Aufspaltung eines Stromfadens, der aus einem Kanal des Mischers kommt, in mehrere Teilströmungen am Eintritt des Diffusors erreicht. Diese Teilströmungen werden mit weiteren Teilströmungen, die durch Aufteilung anderer Stromfäden, die aus dem Mischer kommen, vermischt.

Da sich die Kanäle innerhalb des Diffusors in Strömungsrichtung vergrößern, wird auch erreicht, daß der Diffusor eine gewisse Mischwirkung des Fluids innerhalb eines Kanals hat, da sich die Strömungsgeschwindigkeit innerhalb des Diffusors verringert wird, so daß das Verhältnis zwischen Strömungsgeschwindigkeit und Diffusionsgeschwindigkeit sich in Richtung der Diffusionsgeschwindigkeit verschiebt.

Die erfindungsgemäße Vorrichtung weist vorzugsweise einen Diffusor auf, der durch einen Mantel und wenigstens ein Stapel aufeinander geschichteter glatter und gewellter Blechlagen gebildet ist. Die Ausgestaltung des Diffusors kann entsprechend der durch die WO 89/02978 oder entsprechend der WO 93/20 339 bekannter Ausgestaltungen eines Diffusors erfolgen. Der Inhalt dieser Druckschriften wird auch zum Inhalt dieser Erfindungsbeschreibung gemacht.

Zu einer noch weiteren Verbesserung der Durchmischung des Fluids wird gemäß einer noch weiteren vorteilhaften Ausgestaltung vorgeschlagen, daß wenigstens ein Teil der Kanäle des Diffusors strömungstechnisch miteinander verbunden ist.

Die Kanäle des Diffusors sind durch Kanalwände begrenzt. Vorzugsweise weist wenigstens ein Teil der Kanalwände Öffnungen auf. Insbesondere wird vorgeschlagen, daß wenigstens einem Teil der Öffnungen Leitflächen zugeordnet sind, die schräg zur Kanalwand verlaufen. Durch diese Leitflächen wird eine Umlenkung in der Strömung von einem Kanal in einen benachbarten Kanal erreicht.

Um eine möglichst schnelle Durchmischung des Fluids in radialer Richtung des Diffusors zu erreichen, wird vorgeschlagen, daß zwischen gewellten Blechlagen glatte Blechlagen vorgesehen sind, die wenigstens teilweise netzartig ausgebildet sind. Die glatten Blechlagen können durch ein Streckmetall gebildet sein.

Gemäß einer noch weiteren vorteilhaften Ausgestaltung der Erfindung wird vorgeschlagen, daß der Diffusor im wesentlichen unmittelbar hinter dem Mischer angeordnet ist.

Weitere Einzelheiten und Vorteile der Erfindung werden anhand des in der Zeichnung dargestellten Ausführungsbeispiels erläutert.

Im einzelnen zeigen:
- Figur 1: schematisch eine Vorrichtung zu katalytischen Reduktion von Stichoxide enthaltenden Abgasen einer Verbrennungskraftmaschine,
- Figur 2: einen Mischer im Längsschnitt,
- Figur 3: einen Mischer in einer Vorderansicht mit spiralförmig verlaufenden Blechlagen,
- Figur 4: einen Mischer im Längsschnitt mit Strömungsumlenkungen in Teilbereichen nach außen und in Teilbereichen nach innen,
- Figur 5: einen Mischer in einer Vorderansicht mit S-förmigen Blechlagen,
- Figur 6: perspektivisch eine Ausführungsform eines Diffusors,
- Figur 7: eine weitere Ausführungsform eines Diffusors im Querschnitt,
- Figur 8: schematisch einen Ausschnitt einer Ausführungsform einer Blechlage, wie sie für einen Mischer bzw. einen Diffusor geeignet ist und
- Figur 9: ein zweites Ausführungsbeispiel einer gewellten und glatten Blechlage für einen Mischer bzw. für einen Diffusor.

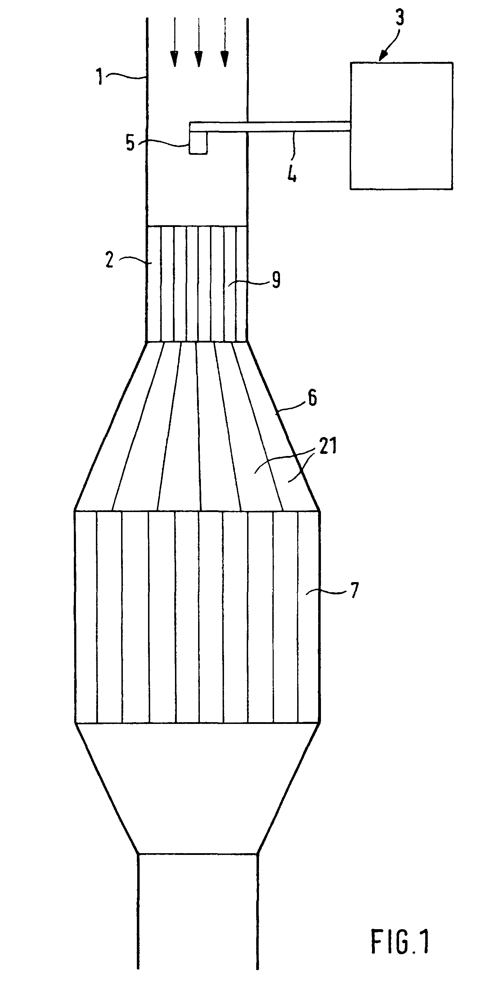

Figur 1 zeigt schematisch eine Vorrichtung zur katalytischen Reduktion von NO_{X} enthaltenden Abgasen einer Verbrennungskraftmaschine. Die Vorrichtung weist eine Abgasleitung 1 auf, die mit ihrem einem Ende mit wenigstens einem Abgasauslaß einer Verbrennungskraftmaschine, die nicht dargestellt ist, verbindbar ist. Mit den Pfeilen ist die Strömungsrichtung des Abgases innerhalb der Abgasleitung 1 dargestellt.

Durch eine Zufuhreinrichtung 3 ist Reduktionsmittel, insbesondere Harnstoff, in die Abgasleitung einleitbar. Die Zufuhreinrichtung weist eine Zufuhrleitung 4 auf, die in die Abgasleitung hineinragt. Am freien Ende der Leitung 4 ist eine Düse, insbesondere eine Sprühdüse angeordnet.

Innerhalb der Abgasleitung 1 ist ein Mischer 2 angeordnet. Er ist in Strömungsrichtung eines Abgases betrachtet stromabwärts der Zufuhreinrichtung des Reduktionsmittels angeordnet. Die Düse 5 ist so ausgerichtet, daß diese das Reduktionsmittel in Richtung der Abgasströmung in das Abgas einspritzt, bzw. einsprüht.

Der Mischer 2 weist eine Vielzahl vom Fluid durchströmbare Kanäle 9 auf.

In der Figur 1 ist dargestellt, daß sich unmittelbar an den Mischer 2 ein Diffusor 6 anschließt. Der Diffusor 6 weist eine Vielzahl vom Abgas durchströmbare Kanäle 21 auf, die einen in Strömungsrichtung zunehmenden Querschnitt haben.

Dem Diffusor 6 ist ein katalytischer Konverter 7 nachgeordnet. Der Konverter 7 kann auch durch mehrere Teilkonverter gebildet sein, die beabstandet zueinander angeordnet sind.

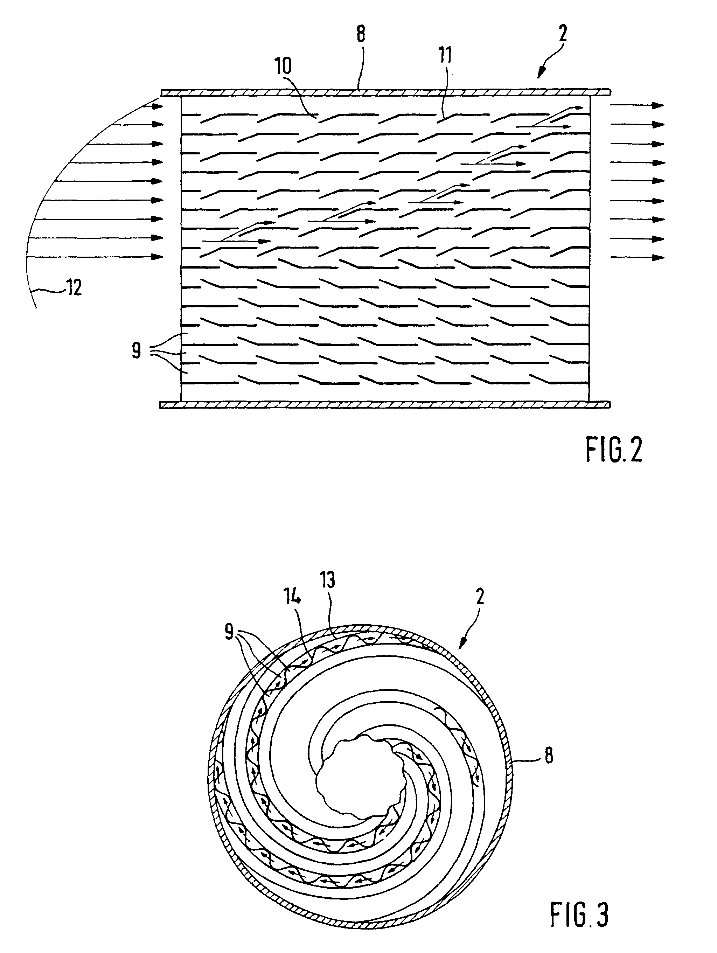

Figur 2 zeigt schematisch eine Ausführungsform eines Mischers im Längsschnitt. Der Mischer 2 ist gebildet durch eine Mehrzahl von zumindest in Teilbereichen strukturierten Blechen, die vom Abgas durchströmbare Kanäle 9 begrenzen. Wenigstens ein Teil der Kanäle 9 ist mit Öffnungen 10 versehen. Den Öffnungen 10 sind Leitflächen zugeordnet, welche schräg zur Längsachse des Mischers 2 verlaufen. Der Mischer 2 ist nach außen hin durch ein Mantelrohr 8 begrenzt. Das in der Abgasleitung 1 strömende Abgas weist im allgemeinen ein parabelförmiges Strömungsprofil auf, so daß nicht sämtliche Kanäle 9 gleiche Volumenströme erhalten. Die im Längsschnitt schematisch angedeutete Verteilung der Leitflächen 11 bewirkt eine Vergleichmäßigung des Strömungsprofils und somit auch eine Vergleichmäßigung der im Fluid enthaltenenen Komponenten, indem aus den inneren Kanälen mit hohem Volumenstrom immer wieder Teilströme in weiter außen liegende, benachbarte Kanäle mit niedrigem Volumenstrom gelenkt werden.

Eine solche Teilung des Stromes kann durch einen Wabenkörper erreicht werden, der zumindest im Außenbereich aus etwa evolventenförmig verlaufenden Schichten aus glatten 13 und gewellten 14 Blechen besteht, wie in der Figur 3 schematisch dargestellt ist. Durch die Pfeile in der Figur 3 wird angedeutet, daß die Strömung durch Öffnungen und Leitflächen immer wieder teilweise in benachbarte weiter außen liegende Kanäle 9 abgezweigt werden, wodurch eine Vergleichmäßigung der Volumenströme von innen nach außen stattfindet, wodurch auch eine Durchmischung des Fluids erreicht wird.

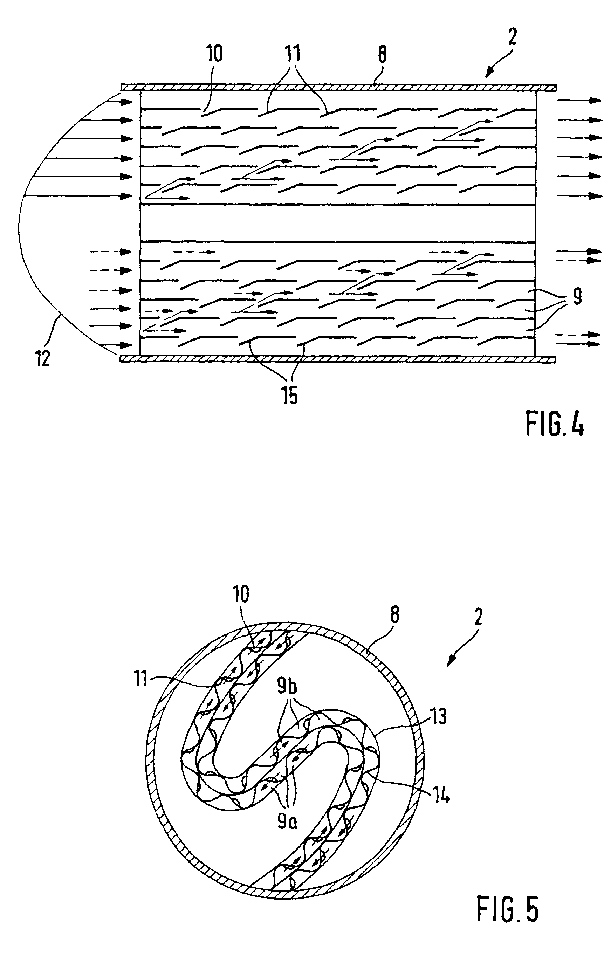

Figur 4 veranschaulicht schematisch eine weitere Ausführungsform eines Mischers 2 im Längsschnitt. Der Mischer 2 weist Öffnungen 10 und Leitflächen 11, 13 auf. Durch den Mischer 2 wird eine besonders gute Durchmischung der Strömung erreicht. Der Mischer 2 ist durch einen metallischen Wabenkörper gebildet, der in einem Mantelrohr 8 angeordnet ist. Der Mischer 2 wird durch ein im wesentlichen parabelförmiges Strömungsprofil 12 angeströmt. Er weist eine Vielzahl von Kanälen 9 auf.

In Teilbereichen des Mischers 2 sind die Leitflächen 11 so gerichtet, daß die Teilströme der Volumenströme von innen nach außen ablenken, während in anderen Teilbereichen Volumenströme von außen nach innen umgelenkt werden, wie dies insbesondere im unteren Teil des Mischers 2 schematisch durch die Pfeile angedeutet ist.

Anhand der Darstellung eines Mischers 2 in einer Vorderansicht nach Figur 5 wird deutlich, daß der Mischer 2 durch S-förmig gebogene Blechlagen gebildet ist. Der Mischer weist glatte 13 und gewellte 14 Blechlagen auf, welche in einem Stapel angeordnet sind, dessen Enden gegensinnig verschlungen sind. Innerhalb der gewellten Blechlagen 14 sind Leitflächen 11 und Öffnungen 10 an unterschiedlichen Flanken ausgebildet und unterschiedlich ausgerichtet, so daß beispielsweise in zwei benachbarten Lagen von Kanälen 9a, 9b unterschiedlich gerichtete Teilströme abgezweigt werden.

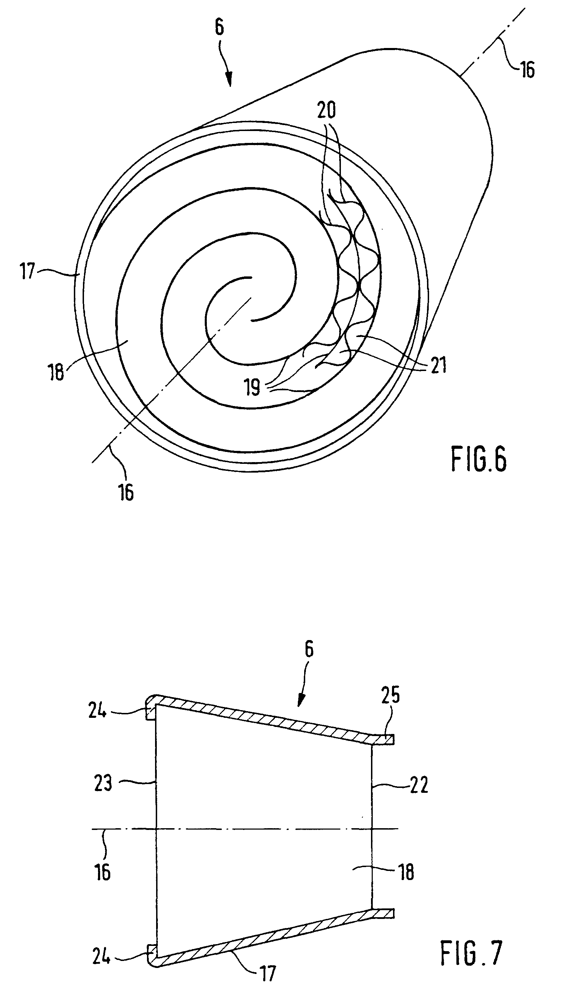

Figur 6 zeigt perspektivisch und schematisch eine Ausführungsform eines Diffusors 6. Der Diffusor 6 ist bezüglich einer Achse 16 konisch ausgebildet. Er weist einen konischen Mantel 17 auf. Innerhalb des Mantels 17 ist ein Stapel 18 angeordnet, der S-förmig verschlungen ist. Dieser Stapel 18 umfaßt glatte Bleche 19 und gewellte Bleche 20. Die glatten Bleche 19 und die gewellten Bleche 20 begrenzen Kanäle 21, welche eine in Strömungsrichtung zunehmenden Querschnitt aufweisen.

Hinsichtlich der Herstellung und Ausgestaltung eines solchen Diffusors wird auf die WO 93/20 339 verwiesen.

Figur 7 zeigt eine weitere Ausführungsform eines Diffusors 6. Der Diffusor 6 ist gebildet durch einen Mantel 17, in dem ein Stapel 18 angeordnet ist. Der Diffusor 6 ist konisch ausgebildet. Mit dem Bezugszeichen 22 ist der Eintritt für ein Fluid und mit dem Bezugszeichen 23 ist der Austritt für das Fluid bezeichnet. Der Stapel 18 ist innerhalb des Mantels 17 durch einen umlaufenden Kragen 24 gehaltert. Der Kragen 24 kann durch Umbördelung des Mantels 17 hergestellt sein. Durch den Flansch 25, der sich in axialer Richtung des Diffusors 6 erstreckt und der an der Eintrittsseite 22 ausgebildet ist, kann der Diffusor 6 mit einem Mischer 2 verbunden werden.

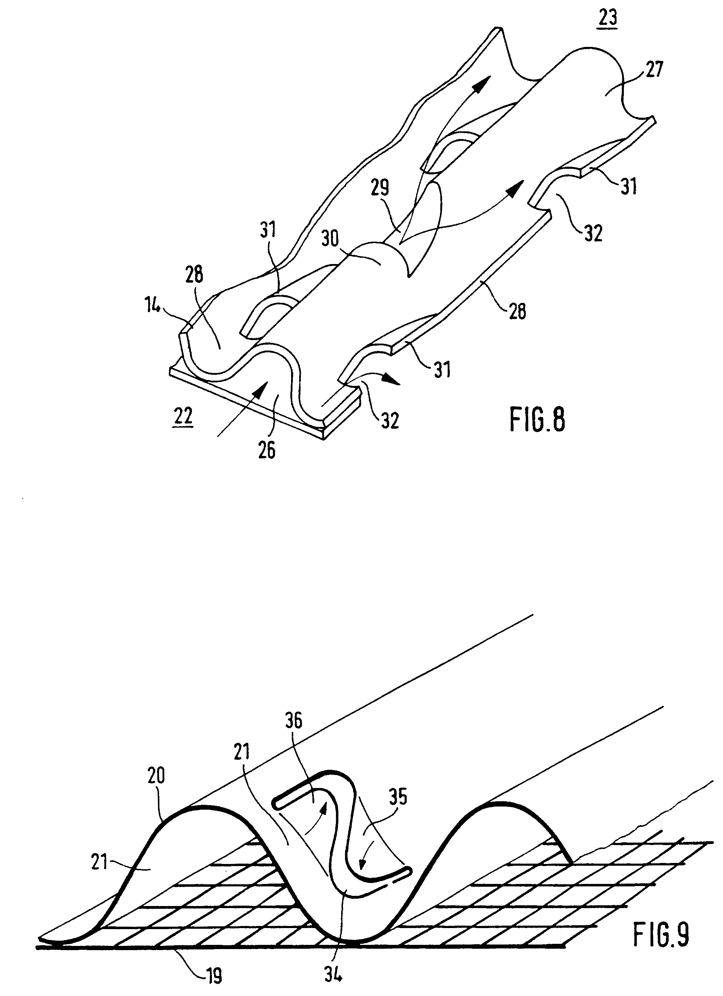

Soll der Diffusor 6 gleichzeitig als Strömungsmischer eingesetzt werden, der eine Strömung des Fluids in radialer und/oder tangentialer Richtung ermöglicht, so wird vorgeschlagen, daß der Stapel 18 so ausgebildet ist, daß zwischen den gewellten Blechen keine geschlossenen glatten Bleche angeordnet werden. Zur Stabilität des Stapels 18 wird vorgeschlagen, daß zwischen benachbarten gewellten Blechen 14 am Eintritt 22 und/oder am Austritt 23 ein Blechstreifen 26 angeordnet wird, wie dies in der Figur 8 dargestellt ist. Der Blechstreifen erstreckt sich lediglich über einen Teil der axialen Länge des Diffusors 6. Die in der Figur 8 dargestellte Blechlage 14 weist eine Wellung mit Wellenbergen 27 und Wellentälern 28 auf. Betrachtet man einen Wellenberg 27 in axialer Richtung, so ist erkennbar, daß der Wellenberg 27 zumindest eine Verformung 29 aufweist, die als Strömungsteiler dient. Angedeutet ist, daß an der Verformung 29 ein Fluidstrom in die benachbarten Wellentäler 28 umgeleitet wird. Vor der Verformung 29 ist der Wellenberg bei 30 mit einer Öffnung versehen, so daß ein Fluid einströmend bei 22 durch die Öffnung 30 heraus und die Verformung 29 anströmt.

Alle Wellenberge 27 oder mehrere ausgewählte Wellenberge 27 können mit derartigen Verformungen 29 und Öffnungen 30 versehen sein. In axialer Richtung betrachtet kann ein Wellenberg mit mehreren hintereinander angeordneten Verformungen und Öffnungen versehen sein.

Figur 8 zeigt desweiteren, daß in den Wellentälern 28 Ausprägungen 31 mit Öffnungen 32 ausgebildet sind. Durch diese Ausgestaltung des Diffusors wird eine Vermischung in Umfangsrichtung als auch eine Vermischung in radialer Richtung erreicht.

Figur 9 zeigt eine noch weitere Konfiguration eines glatten 19 und eines gewellten 20 Bleches. Das glatte Blech 19 ist netzartig ausgebildet. Vorzugsweise handelt es sich bei dem glatten Blech 19 um ein Streckmetall.

Das gewellte Blech 20 weist einen Schlitz 34 auf. Die Darstellung des Schlitzes 34 ist schematisch. Der Schlitz 34 ist vorzugsweise an den Flanken des Wellenbergs 27 ausgebildet. Es können mehrere hintereinander ausgebildete Schlitze 34 im gewellten Blech 20 vorhanden sein.

Der Schlitz 34 ist teilweise durch zwei Laschen 35, 36 begrenzt. Die Laschen 35, 36 sind aus der Ebene des gewellten Blechs 20 herausgebogen. Hierdurch entstehen Strömungsleitflächen, welche zu einer Querströmung zwischen benachbarten Kanälen 21 führt. Hierdurch wird eine Durchmischung in Umfangsrichtung des Diffusors 6 erreicht. Eine Durchmischung in radialer Richtung wird durch das netzartig ausgebildete glatte Blech 19 erzielt.

### Bezugszeichenliste

- 1.: Abgasleitung
- 2.: Mischer
- 3.: Zufuhreinrichtung
- 4.: Leitung
- 5.: Düse
- 6.: Diffusor
- 7.: Konverter
- 8.: Mantelrohr
- 9, 9a, 9b: Kanal
- 10: Öffnung
- 11: Leitflächen
- 12: Strömungsprofil
- 13: glattes Blech
- 14: gewelltes Blech
- 15: Leitfläche
- 16: Achse
- 17: Mantel
- 18: Stapel
- 19: glattes Blech
- 20: gewelltes Blech
- 21: Kanal
- 22: Eintritt
- 23: Austritt
- 24: Kragen
- 25: Flansch
- 26: Blechstreifen
- 27: Wellenberg
- 28: Wellental
- 29: Verformung
- 30: Öffnung
- 31: Ausprägung
- 32: Öffnung
- 34: Schlitz
- 35, 36: Lasche

## Patentansprüche

1. Vorrichtung zur katalytischen Reduktion von NOₓ enthaltenden Abgasen einer Verbrennungskraftmaschine mit einer Abgasleitung (1), die mit ihrem einen Ende mit wenigstens einem Abgasauslaß der Verbrennungskraftmaschine verbindbar ist, einer Zufuhreinrichtung (3), durch die ein Reduktionsmittel, insbesondere Hamstoff in die Abgasleitung (1) einleitbar ist, wenigstens einem Mischer (2), der in Strömungsrichtung eines Abgases stromabwärts der Zuführung des Reduktionsmittels in der Abgasleitung (1) angeordnet ist, wobei dieser eine Vielzahl vom Fluid durchströmbare Kanäle (9, 9a, 9b) aufweist, und mit wenigstens einem katalytischen Konverter (7), der dem mindestens einem Mischer (2) nachgeordnet ist, **dadurch gekennzeichnet, daß** zwischen dem Mischer (2) und dem Konverter (7) wenigstens ein Diffusor (6) vorgesehen ist, der eine Vielzahl vom Abgas durchströmbare Kanäle (21) hat, welche einen in Strömungsrichtung zunehmenden Querschnitt aufweisen, wobei die Querschnittsform der einzelnen Kanäle (21) des Diffusors (6) am Eintritt (22) im wesentlichen der Querschnittsform der einzelnen Kanäle des Mischers (2) am Austritt entsprechen.

2. Vorrichtung nach Anspruch 1, **dadurch gekennzeichnet, daß** der freie Strömungsquerschnitt am Eintritt (22) des Diffusors (6) wenigstens dem freien Strömungsquerschnitt am Austritt des Mischers (2) entspricht.

3. Vorrichtung nach Anspruch 2, **dadurch gekennzeichnet, daß** der Diffusor (6) am Eintritt (22) eine Zelldichte aufweist, die einer Zelldichte des Mischers (2) entspricht.

4. Vorrichtung nach Anspruch 1, **dadurch gekennzeichnet, daß** wenigstens ein Teil der einzelnen Kanäle (21) des Diffusors (6) am Eintritt (22) mit einem Teil der einzelnen Kanäle des Mischers (2) am Austritt fluchtet.

5. Vorrichtung nach einem der Ansprüche 1 bis 4, **dadurch gekennzeichnet, daß** der Diffusor (6) durch einen Mantel (17) und wenigstens einen Stapel (18) aufeinadergeschichteter glatter und gewellter Blechlagen (19, 20) gebildet ist.

6. Vorrichtung nach einem der Ansprüche 1 bis 5, **dadurch gekennzeichnet, daß** wenigstens ein Teil der Kanäle (21) des Diffusors (6) strömungstechnisch miteinander verbunden ist.

7. Vorrichtung nach Anspruch 6, **dadurch gekennzeichnet, daß** die Kanäle (21) durch Kanalwände begrenzt sind, wobei wenigstens ein Teil der Kanalwände mit Öffnungen (30, 32, 34) versehen sind, und wenigstens einem Teil der Öffnungen (30, 32) Leitflächen (29, 35, 36) zugeordnet sind, die schräg zur Kanalwand 0 verlaufen.

8. Vorrichtung nach 6 der 7, **dadurch gekennzeichnet, daß** die glatten Blechlagen (19) wenigstens teilweise netzartig ausgebildet sind.

9. Vorrichtung nach Anspruch 8, **dadurch gekennzeichnet, daß** die glatten Blechlagen (19) durch ein Streckmetall gebildet sind.

10. Vorrichtung nach einem der Ansprüche 1 bis 9, **dadurch gekennzeichnet, daß** der Diffusor (6) im wesentlichen unmittelbar hinter dem Mischer (2) angeordnet ist.

## Claims

1. A device for the catalytic reduction of NOₓ-containing exhaust gases from an internal combustion engine, having an exhaust pipe (1), one end of which can be connected to at least one exhaust outlet from the internal combustion engine, a feed device (3), by means of which a reducing agent, in particular urea, can be introduced into the exhaust pipe (1), at least one mixer (2) which is arranged downstream of the point where the reducing agent is fed into the exhaust pipe (1), as seen in the direction of flow of an exhaust gas, this mixer having a multiplicity of passages (9, 9a, 9b) through which the fluid can flow, and having at least one catalytic converter (7) which is arranged downstream of the at least one mixer (2), **characterised in that** between the mixer (2) and the converter (7) there is at least one diffuser (6) which has a multiplicity of passages (21) through which the exhaust gas can flow and which have a cross-section which increases in the direction of flow, wherein the cross-sectional shape of the individual passages (21) of the diffuser (6) at the entry (22) substantially corresponds to the cross-sectional shape of the individual passages of the mixer (2) at the exit.

2. A device according to claim 1, **characterised in that** the free cross-section of flow at the entry (22) to the diffuser (6) at least corresponds to the free cross-section of flow at the exit from the mixer (2).

3. A device according to claim 2, **characterised in that** the diffuser (6) at the entry (22) has a cell density which corresponds to a cell density of the mixer (2).

4. A device according to claim 1, **characterised in that** at least some of the individual passages (21) of the diffuser (6) at the entry (22) are aligned with some of the individual passages of the mixer (2) at the exit.

5. A device according to one of claims 1 to 4, **characterised in that** the diffuser (6) is formed by a casing (17) and at least one stack (18) of smooth and undulating sheet-metal layers (19, 20) which are layered on top of one another.

6. A device according to one of claims 1 to 5, **characterised in that** at least some of the passages (21) of the diffuser (6) are connected to one another in terms of flow.

7. A device according to claim 6, **characterised in that** the passages (21) are delimited by passage walls, at least some of the passage walls being provided with openings (30, 32, 34), and at least some of the openings (30, 32) being assigned guide surfaces (29, 35, 36) which run obliquely with respect to the passage wall.

8. A device according to claim 6 or claim 7, **characterised in that** the smooth sheet-metal layers (19) are at least partially of mesh-like design.

9. A device according to claim 8, **characterised in that** the smooth sheet-metal layers (19) are formed by an expanded metal.

10. A device according to one of claims 1 to 9, **characterised in that** the diffuser (6) is arranged substantially directly behind the mixer (2).

## Revendications

1. Dispositif destiné à la réduction catalytique de gaz d'échappement qui contiennent du NO_{X}, d'une machine à combustion interne avec une conduite de gaz d'échappement (1) qui avec une de ses extrémités peut être liée à au moins une sortie de gaz d'échappement de la machine à combustion interne, avec un dispositif d'alimentation (3) par lequel un agent réducteur, notamment de l'urée, peut être introduit dans la conduite de gaz d'échappement (1), avec au moins un mélangeur (2), qui est agencé dans la conduite de gaz d'échappement (1) dans le sens d'écoulement d'un gaz d'échappement en aval de l'alimentation de l'agent réducteur, le mélangeur (2) présentant une multiplicité de canaux (9, 9a, 9b) pouvant être parcourus par le fluide et avec au moins un convertisseur catalytique (7) qui est agencé en aval de l'au moins un mélangeur (2), **caractérisé en ce qu'**entre le mélangeur (2) et le convertisseur (7) au moins un diffuseur (6) est prévu qui a une multiplicité de canaux (21) pouvant être parcourus par le gaz d'échappement, qui ont une section transversale qui augmente dans le sens d'écoulement, dans quel cas la forme de section transversale des canaux individuels (21) du diffuseur (6) à l'entrée (22) correspond sensiblement à la forme de section transversale des canaux individuels du mélangeur (2) à la sortie.

2. Dispositif selon la revendication 1, **caractérisé en ce que** la section transversale libre d'écoulement à l'entrée (22) du diffuseur (6) correspond au moins à la section transversale libre d'écoulement à la sortie du mélangeur (2).

3. Dispositif selon la revendication 2, **caractérisé en ce que** le diffuseur (6) a une densité cellulaire à l'entrée (22) qui correspond à une densité cellulaire du mélangeur (2).

4. Dispositif selon la revendication 1, **caractérisé en ce qu'**au moins une partie des canaux individuels (21) du diffuseur (6) à l'entrée (22) est alignée avec une partie des canaux individuels du mélangeur (2) à la sortie.

5. Dispositif selon l'une des revendications 1 à 4, **caractérisé en ce que** le diffuseur (6) est formé par une enveloppe (17) et par au moins une pile (18) de couches de tôles lisses et ondulées (19, 20) empilées les unes sur les autres.

6. Dispositif selon l'une des revendications 1 à 5, **caractérisé en ce qu'**au moins une partie des canaux (21) du diffuseur (6) sont liées les uns aux autres quant à la technique d'écoulement.

7. Dispositif selon la revendication 6, **caractérisé en ce que** les canaux (21) sont limités par des parois de canaux, dans quel cas au moins une partie des parois de canaux est pourvue d'ouvertures (30, 32, 34) et des surfaces de guidage (29, 35, 36) sont associées à au moins une partie des ouvertures (30, 32), les surfaces de guidage (29, 35, 36) s'étendant obliquement par rapport à la paroi de canal.

8. Dispositif selon la revendication 6 ou 7, **caractérisé en ce que** les couches de tôles lisses (19) sont réalisées au moins partiellement à la façon d'un filet.

9. Dispositif selon la revendication 8, **caractérisé en ce que** les couches de tôles lisses (19) sont formées par un métal déployé.

10. Dispositif selon l'une des revendications 1 à 9, **caractérisé en ce que** le diffuseur (6) est agencé sensiblement directement derrière le mélangeur (2).
